# EUROPÄISCHE PATENTSCHRIFT

(11) **EP 0 730 612 B1**
(45) Veröffentlichungstag und Bekanntmachung des Hinweises auf die Patenterteilung: **17.06.1998**
(21) Anmeldenummer: 95900768.3
(22) Anmeldetag: 22.11.1994
(51) Int. Cl.: C08F 290/06, C08G 18/67, C08G 18/42, C08G 18/48, C09J 175/16, C09D 175/16, C09K 3/10

(54) **AEROBER KLEBSTOFF**
AEROBIC ADHESIVE
ADHESIF AEROBIE

(30) Priorität: 26.11.1993 DE 4340239; 19.05.1994 DE 4417467
(43) Veröffentlichungstag der Anmeldung: 11.09.1996
(73) Patentinhaber: Henkel Kommanditgesellschaft auf Aktien, 40191 Düsseldorf (DE)
(72) Erfinder: FRIESE, Carsten, D-22559 Hamburg (DE); GEORGE, Frank, D-30419 Hannover (DE); RADEMACHER, Dieter, D-31515 Wunstorf (DE); HUVER, Thomas, D-40625 Düsseldorf (DE); BERGMANN, Frank, D-30823 Garbsen (DE)
(74) Vertreter: Weber, Thomas, Dr.Dipl.-Chem.
(86) Internationale Anmeldenummer: EP9403847
(87) Internationale Veröffentlichungsnummer: WO9514720

(56) Entgegenhaltungen:
- EP-A- 0 539 030
- FR-A- 2 508 924
- GB-A- 2 163 443
- US-A- 3 425 988
- US-E- R E29 131

## Beschreibung

Die vorliegende Erfindung betrifft eine aerob härtende Zusammensetzung, ihre Herstellung und Verwendung.

Klebeverbindungen sind in der Haushaltsgeräte-, Elektro-, Elektronik-, Möbel-, Sportartikel-, Bau- (Innen- und Außenbereich), Keramikindustrie und im Kraftfahrzeugbau inklusive deren Zulieferbetrieben anzutreffen. Die Maschinenbaubranche profitiert von den klebtechnischen Eigenschaften genauso wie die Armaturen- oder Installationstechnik, wo zusätzlich Dichtungsaufgaben übernommen werden müssen. Neben den gleichartigen Materialkombinationen von Stahl, Aluminium, Messing, Kupfer, lackierten Metalloberflächen, Holz, Glas, PVC, PC (Polycarbonat), und ABS sind insbesondere unterschiedliche Materialpaarungen klebtechnisch von Bedeutung. Bei diesen Verbundverklebungen wird oft durch unterschiedliches Wärmeausdehnungsverhalten oder Adhäsionsverlust, auch an Materialien wie Ferrit oder Keramik, die Leistungsgrenze bekannter Klebstoffsysteme erreicht. In einigen Anwendungen müssen die Klebstoffe zusätzlich Dämpfungseigenschaften besitzen bzw. dürfen bei unterschiedlichen elektrochemischen Potentialen keine korrosionsfördernde Eigenschaft aufweisen.

Von den bekannten Klebstoffsystemen wie 2K-Epoxidharzen, Cyanacrylaten, Dispersions-, Kontakt-, 2K-Acrylat-, 2K-Polyurethan- oder anaerob-härtenden Klebstoffen sind anwendungstechnische Grenzen hinsichtlich Spaltfüllvermögen, Elastizität, automatischer Dosierung, Wärmebeständigkeit, Flüchtigkeits- und Alterungsverhalten bekannt.

Ferner werden für Verklebungen unterschiedlichster Materialien bei der industriellen automatischen Fertigung überwiegend kurze Taktzeiten verlangt. Viele Klebstoff-Rezepturen benötigen für die Aktivierung des Klebstoffes Wartezeiten (vor und nach dem Fügen), die bei der industriellen automatischen Fertigung nicht akzeptiert werden können.

Die Dosierung und Lagerung der Klebstoffe ist ferner von großer Bedeutung. Gemäß dem Stand der Technik wird ein flexibler Kunststoffbehälter mit Kleb- bzw. Dichtstoff befüllt (z.B. anaerober Klebstoff) und in einen Druckluftbehälter mit Halterung hineingelegt. Die Entleerung der Gebinde, in die vorher ein Steigrohr eingesetzt wird, erfolgt durch Beaufschlagung mit Druckluft auf den Druckluftbehälter. Mit Hilfe einer Schlauchleitung wird das Produkt bis an die entsprechende Applikationsstelle gebracht und mit einem Dosierventil dosiert. Die Gebinde lassen sich bei diesem Verfahren nicht unter 10% Restinhalt entleeren. Nachteilig wirkt sich auf anaerobe Klebstoffe auch die zusätzliche Durckluftaufnahme des Produktes auf das Dosieren aus. Für die Dosierung von aeroben Klebstoffen gibt es bisher noch keine automatischen Dosiermöglichkeiten aus Tuben und flexiblen Kunststoffbehältern.

Um die Zeit zwischen der Klebstoffapplikation und dem Fügen der zu verbindenden Teile zu verringern, kann der Sauerstoff dem Klebstoff auch schon vor dessen Applikation zugegeben werden. Dazu ist der Einbau einer Mischkammer notwendig, in der der Sauerstoff - sei es in reiner Form oder als Luft - mit mehr oder weniger Druck dem Klebstoff zugefügt wird. Die Mischkammer sollte zwischen der Produktaustrittsöffnung und dem Abgabeventil liegen. Vorzugsweise wird sie in das Abgabeventil eingebaut. Außerdem ist es von Vorteil, wenn die Mischkammer heizbar ist, so daß die Luftkontaktzeit auf den jeweiligen Klebevorgang abgestimmt werden kann. Auf diese Weise ist es möglich, die Dauer des Klebevorganges auf die Taktzeiten einer Serienproduktion einzustellen.

Die der vorliegenden Erfindung zugrundeliegende Aufgabe ist es daher, eine einkomponentige, aerob härtende Klebstoffzusammensetzung zur Verfügung zu stellen, die schnell ein hochfestes, wärme- und alterungs- und feuchtigkeitsbeständiges Polymer ausbildet, und die für die Verklebung eines breiten Spektrums von gleichartigen Materialien und unterschiedlichen Materialien (Verbundmaterialien) geeignet ist.

Ferner sollte die Zusammensetzung in einem speziellen Verfahren verwendet werden können, welches die Luftkontaktzeiten für die Aktivierung des Klebstoffes weiter verkürzt um so auch bei der industriellen Fertigung mit kurzen Taktzeiten eingesetzt zu werden.

Darüberhinaus war es eine weitere Aufgabe der Erfindung ein System zur Lagerung und Dosierung des erfindungsgemäßen aeroben Klebstoffs bereitzustellen.

Die erste Aufgabe wurde erfindungsgemäß gelöst durch eine aerob härtende Zusammensetzung umfassend radikalisch polymerisierbare Verbindungen, ein Aktivatorsystem und gegebenenfalls übliche Zusatzstoffe, dadurch gekennzeichnet, daß die Zusammensetzung als radikalisch polymerisierbaren Verbindungen
A) wenigstens ein Polyurethan(meth)acrylat der allgemeinen Formel

   [H₂C=CR¹-C(=O)-O-R²-O-C(=O)-NH-]ₙR³ (I)

   enthält, worin
   R¹ = Wasserstoff oder eine Methylgruppe
   R² = eine lineare oder verzweigte Alkylgruppe mit 2 bis 6 Kohlenstoffatomen oder Alkylenoxide mit 4 bis 21 Kohlenstoffatomen,
   n = 2 oder 3 ist, und
      R³ für n = 2 ist:

         [-Q-NH-C(=O)]₂[{-O-R⁴-O-C(=O)-NH-Q'-NH-C(=O)}ₘ-O-R⁴-O-]
      wobei m = 0 bis 10 ist,
      R⁴
         a) ein Polycaprolactondiol-Rest,
         b) ein Polytetrahydrofurfuryldiol-Rest,
         c) ein Diol-Rest ist, der sich von einem Polyesterdiol ableitet, der gekennzeichnet ist durch ein C:O-Verhältnis von > 2,6, ein C:H-Verhältnis von < 10 und ein Molekulargewicht von 1000 bis 20000, oder
         d) ein Diol-Rest ist, der sich von einem bei 20 °C flüssigen PES-Diol mit einem Molekulargewicht von 4000 bis 10000 nach HPLC ableitet, und
   R³ für n = 3 ist:

      [-Q-NH-C(=O)-O-((CH₂)₅-C(=O))ₚ-]₃ R⁵ ,

      wobei R⁵ ein Triol-Rest eines 3 bis 6 Kohlenstoffatome enthaltenden, linearen oder verzweigten dreiwertigen Alkohols und p 1 bis 10 ist und
   Q und Q' unabhängig voneinander 6 bis 18 Kohlenstoffatome enthaltende aromatische, aliphatische oder cycloaliphatische Gruppen sind, die sich von Diisocyanaten oder Diisocyanatgemischen ableiten sowie
B) ein oder mehrere (Meth)acrylat-Comonomere enthält,
   wobei die Zusammensetzung
   20 - 80 Gew.-% des Polyurethan(meth)acrylats sowie
   80 - 20 Gew.-% des (Meth)acrylat-Comonomeren, bezogen auf die Gesamtmenge der polymerisierbaren Verbindungen, enthält und das Aktivatorsystem ein Hydrazon-Aktivatorsystem ist.

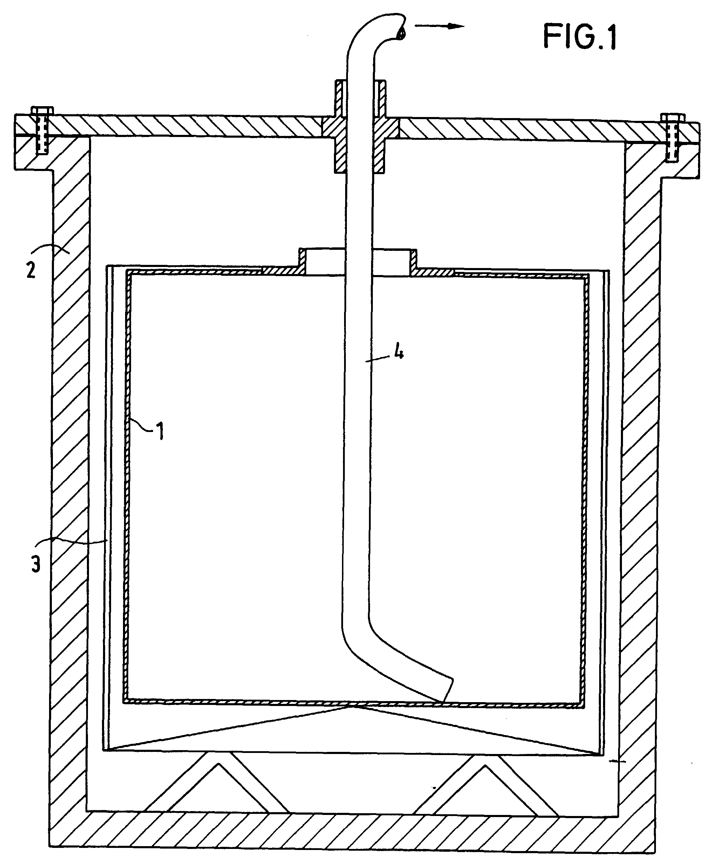

Figur 1 zeigt ein Gebinde zur Lagerung und Dosierung anaerober Klebstoffe nach dem Stand der Technik, in welchem ein flexibles PE-Gebinde 1 in einem Druckluftbehälter 2 mit Hilfe einer Halterung 3 hineingehängt ist. In das Gebinde 1 ist ein Steigrohr 4 hineingehängt, über welches das Produkt aus dem Gebinde herausgepresst wird. An dem Steigrohr können ferner geeignete Schlauchleitungen und/oder Abgabeventile angebracht sein.

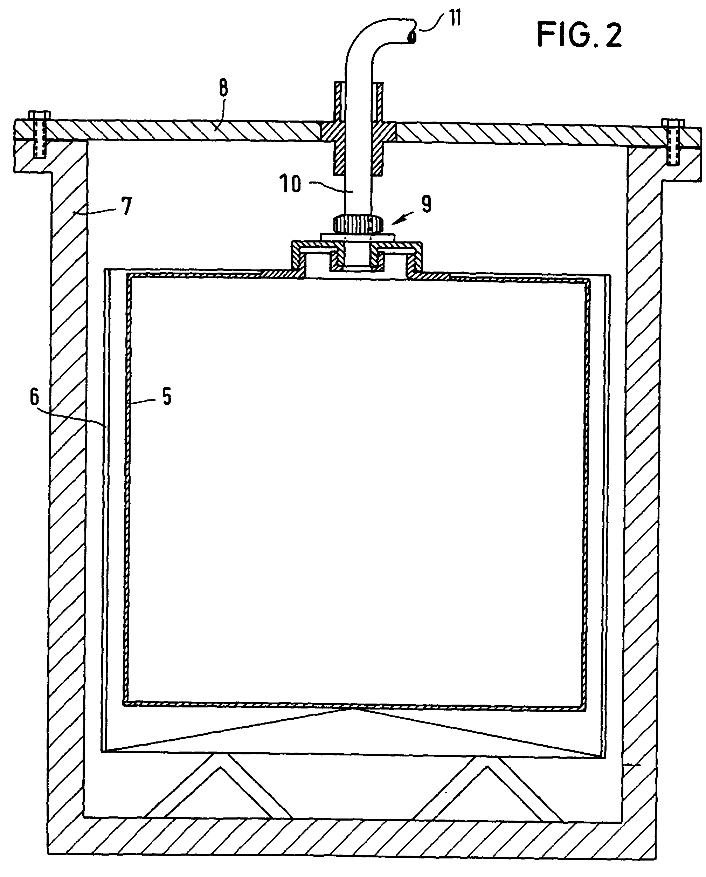

Figur 2 zeigt ein Gebinde zur Lagerung und Dosierung aerob härtenden Klebstoffe nach der Erfindung. Der flexible Kunststoffbehälter 5 (sauerstoffundurchlässig) ist mit Hilfe einer Halterung 6 in den Druckbehälter 7 hineingestellt oder hineingehängt. Die Verbindung zwischen dem flexiblen Kunststoffbehälter 5 und dem Druckbehälterdeckel 8 erfolgt mittels eines verschraubbaren Adapters 9, wodurch ein Abschluß zur Druckluft erzielt wird. Durch diesen Adapter 9 hindurch wird die Klebstoffzusammensetzung bei der Anwendung durch ein Rohr 10 hindurchgepresst, ohne mit der Druckluft in Verbindung zu kommen. Am Produktbehälterausgang 11 können die sonst üblichen Verschraubungen, Schläuche und Ventile angesetzt sein.

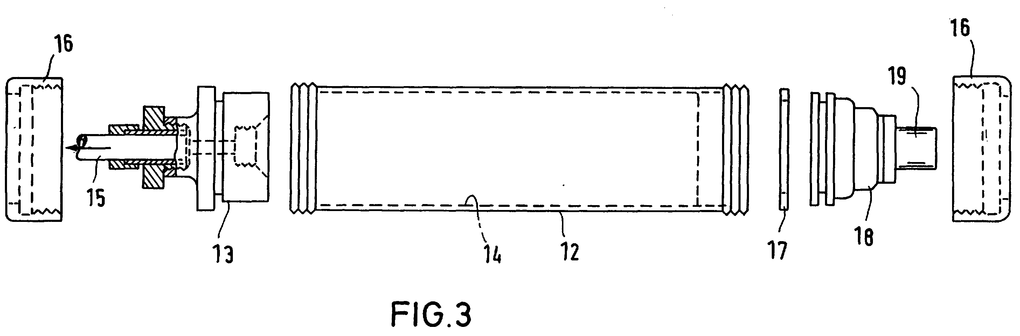

Figur 3 zeigt eine pneumatische Auspresseinheit bestehend aus einer in eine Kartusche 12 eingelegten, mit einem speziellen Tubenadapter 13 versehenen Tube 14. Die Tube 14 enthält den aeroben Hartschaumklebstoff. An den Tubenadapter 13 kann ein Produktschlauch oder -rohr 15 angesetzt sein, über welchen der Klebstoff abgegeben wird. Daran kann wiederum ein Abgabeventil angebracht sein. Der Tubenadapter 13 wird mit seinem angepaßten Gewinde und mit Hilfe einer Überwurfmutter 16 mit der Kartusche 12 verbunden und verschlossen. Am anderen Ende der Kartusche 12 befinden sich die Anschlüsse für die Beaufschlagung der Kartusche 12 mit Druckluft, bestehend aus einer Dichtung 17, einem Druckregler 18 und dem Anschluß für die Druckluftleitung 19. Dieses Ende der Kartusche wird ebenfalls mit Hilfe einer Überwurfmutter 16 verschlossen.

Die Verbindungen der oben genannten Formel (I) sind herstellbar nach im Stand der Technik an sich bekannten Verfahren durch Umsetzung eines in der Estergruppe Hydroxylgruppen enthaltenden Acrylates (R¹=H) oder Methacrylates (R¹=CH₃) mit Isocyanatgruppen enthaltenden Verbindungen unter Bildung von Urethangruppe.

Bei den Acrylaten oder Methacrylaten handelt es sich erfindungsgemäß um Hydroxyalkylacrylate oder -Methacrylate, wobei die Alkylgruppen linear oder verzweigt sein können und zwischen 2 und 6 Kohlenstoffatome enthalten. Gemäß der Erfindung können auch die Ester von Acrylsäure und Methacrylsäure mit Polyethylenglykol und/oder Polypropylenglykol eingesetzt werden. Derartige Acrylate oder Methacrylate enthalten 4 bis 21 Kohlenstoffatome in der Estergruppe, entsprechend 2 bis 10 Ethylenoxideinheiten und 1 bis 7 Propylenoxideinheiten. Die Herstellung derartiger Ester ist dem Fachmann bekannt.

Geeignete Acrylate oder Methacrylate sind solche, für die R² eine Ethylen-, Propylen-, Isopropylen-, n-Butylen-, Isobutylen-Gruppe oder Ethylenoxid- oder Propylenoxideinheiten enthalten.

Bevorzugt für die Umsetzung der Isocyanate mit den Hydroxylgruppen tragenden Acrylaten oder Methacrylaten werden jedoch Hydroxyethylacrylat, Hydroxyethylmethacrylat, 2-Hydroxypropylacrylat, 2-Hydroxypropylmethacrylat, 3-Hydroxypropylacrylat, 3-Hydroxypropylmethacrylat, 6-Hydroxyhexylacrylat, 6-Hydroxyhexylmethacrylat, Polyethylenglykolacrylat, Polyethylenglykolmethacrylat, Polypropylenglykolacrylat und Polypropylenglykolmethacrylat.

Bei den Verbindungen der oben genannten allgemeinen Formel (I) für den Fall, daß n = 2 ist, handelt es sich um Umsetzungsprodukte der oben genannten Hydroxylgruppen enthaltenden Acrylate oder Methacrylate mit Isocyanaten, die erhältlich sind durch Reaktion von geeigneten Diolen mit Diisocyanaten. Bei den Diolen handelt es sich um a) Polycaprolactondiole, b) Polytetrahydrofurfuryldiole und c) spezielle Polyesterdiole. Das Molverhältnis bei der Reaktion von den Diolen mit den Diisocyanaten kann im Verhältnis von 1:2 bis zu 1:1,1 variieren.
a) Polycaprolactondiole sind nach an sich bekannten Verfahren erhältlich durch Ringöffnungspolymerisation von Caprolacton mit geeigneten Diolen, wobei das Verhältnis von Caprolacton zum Diol 1 bis 20 beträgt, also 2 bis 40 Mol Caprolacton pro Mol Diol eingesetzt wird. Das Molekulargewicht der Polycaprolactondiole beträgt zwischen 200 und 4000.
   Als Diole kommen insbesondere lineare oder verzweigte zweiwertige, 2 bis 6 Kohlenstoffatome enthaltende Alkohole in Frage, die ausgewählt sind aus Ethylenglykol, 1,2-Propandiol, 1,3-Propandiol, 1,2-, 1,3- oder 1,4-Butandiol, 1,5-Pentandiol, 2-Methyl-1,4-butandiol, 2,2-Dimethyl-1,3-propandiol, 1,2- oder 1,6-Hexandiol, 1,10-Decandiol.
   Die Reaktionsprodukte aus dem Diol und dem Caprolacton werden anschließend nach dem Fachmann bekannten Verfahren mit aromatischen, aliphatischen oder cyclischen Diisocyanaten umgesetzt. Geeignete Diisocyanate von denen sich Q und unabhängig davon auch Q' ableitet, sind ausgewählt aus 2,4-Toluendiisocyanat, 2,6-Toluendiisocyanat, 4,4'-Diphenylmethandiisocyanat (MDI), 4,4'-Dicyclohexyldiisocyanat, meta - und para-Tetramethyl-xylendiisocyanat, 3-Isocyanatomethyl-3,5,5-trimethylcyclohexylisocanat (Isophorondiisocyanat), Hexamethylendiisocyanat, 1,5-Naphthylendiisocyanat, Dianisidindiisocyanat, Di(2-isocyanatoethyl)-bicyclo[2.2.1]-hept-5-en-2,3-dicarboxylat, 2,2,4- und 2,4,4-Trimethylenhexamethylendiisocyanat und Gemischen davon.
   Anschließend wird das Reaktionsprodukt aus dem Diol, dem Caprolacton und dem Diisocyanat nach an sich bekannten Verfahren mit dem Hydroxylgruppen enthaltenden Acrylat oder Methacrylat zum Polyurethan(meth)acrylat umgesetzt.
b) Der Aufbau der sich von Polytetrahydrofurfuryldiol ableitenden Verbindungen erfolgt prinzipiell nach dem gleichen Schema wie unter a) beschrieben. Zunächst wird Polytetrahydrofurfuryldiol mit einem der oben unter a) genannten Diisocyanate zur Reaktion gebracht und das Reaktionsprodukt daraus mit den bereits unter a) erwähnten Hydroxylgruppen enthaltenden Acrylaten oder Methacrylaten zum Polyurethan(meth)acrylat umgesetzt. Hinsichtlich des Verfahrens zur Umsetzung von Diolen mit Diisocyanaten wird auf die dem Fachmann bekannte einschlägige Fachliteratur verwiesen. Das Molekulargewicht der Produkte beträgt zwischen 200 und 4500.
c) Besonders gute Eigenschaften, insbesondere hinsichtlich der Hydrophobierung wird durch den Einsatz von Polyurethan(meth)-acrylaten auf Basis spezieller Polyesterdiole erreicht. Diese Polyurethan(meth)acrylate weisen eine besondere elastifizierende Wirkung auf.

Bei diesen Polyurethan(meth)acrylaten handelt es sich um Verbindungen der allgemeinen Formel II

[H₂C=CR¹-C(=O)-O-R²-O-C(=O)-NH-Q-NH-C(=O)]₂[{-O-R⁴-O-C(=O)-NH-Q'-N-H-C(=O)}ₘ-O-R⁴-O-] (II)

wobei m, R¹, R², Q und Q' den oben genannten Definitionen entsprechen.

R⁴ entspricht Polyesterdiol-Resten, die sich von Polyesterdiolen ableiten, die gekennzeichnet durch ein C:0-Verhältnis von > 2,6, vorzugsweise > 3,0 und ein C:H-Verhältnis von < 10. Ferner zeichnen sich diese Polyesterdiole durch ein Molekulargewicht von 1000 bis 20000, insbesondere von 1000 bis 10000 aus.

Die Herstellung dieser speziellen Polyesterdiole erfolgt durch Umsetzung von langkettigen Diolen, insbesondere Dimerdiol (hydrierte Dimerfettsäure) mit kürzerkettigen 4 bis 8 Kohlenstoffatome enthaltenden Dicarbonsäuren oder deren Anhydriden, insbesondere Bernsteinsäure oder Bernsteinsäureanhydrid. Die Polyesterdiole können auch hergestellt werden durch Umsetzung von kürzerkettigen 4 bis 8 Kohlenstoffatome enthaltenden Diolen, insbesondere 1,6-Hexandiol mit langkettigen Fettsäuren, insbesondere Dimerfettsäure-Gemisch aus dimerisierten Fettsäuren von acyclischen und cyclischen Dicarbonsäuren mit durchschnittlich 36 Kohlenstoffatomen. Es können aber auch Gemische aus langkettigen Diolen mit kürzerkettigen Diolen eingesetzt werden, wie insbesondere Gemische aus Hexandiol und Polyethylenglykol oder aus Dimerdiol und Diethylenglykol.

Allgemein als Diole besonders bevorzugt sind lineare oder verzweigte C₂-C₄₄-Alkyldiole wie Ethylenglykol, 1,2- oder 1,3-Propylenglykol, 1,2-, 1,3- oder 1,4-Butandiol, Neopentylglykol, 1,2- oder 1,6-Hexandiol, 1,10-Decandiol, 1,12-Octadecandiol. In Frage kommen aber auch cyclische C₆-C₄₄-Alkyldiole.

Ferner bevorzugt sind Ethergruppen enthaltende Diole, wie beispielsweise Di-, Tri- oder Tetraethylen- oder propylenglykol oder deren oligomeren Homologen.

Allgemein als Dicarbonsäure besonders bevorzugt sind lineare, oder verzweigte C₂-C₄₄-Alkyldicarbonsäuren, wie Oxalsäure, Malonsäure, Bernsteinsäure, Glutarsäure, Adipinsäure, Pimelinsäure, Korksäure, Azealinsäure, Nonandicarbonsäure, Decandicarbonsäure, Undecandicarbonsäure oder deren technische Gemische zur Reaktion mit den Diolen können ebenfalls ungesättigte C₄-C₄₄-Dicarbonsäuren, wie Maleinsäure, Fumarsäure, Itaconsäure oder Aconitsäure eingesetzt werden.

Die Veresterung kann nach an sich bekannten Verfahren in Gegenwart eines Katalysators in einem geeigneten Lösungsmittel bei erhöhter Temperatur unter azeotroper Entfernung des Reaktionswassers erfolgen. Als Katalysator ist Zinn(II)octoat und als Lösungsmittel Xylen bevorzugt.

Die so gewonnenen Polyesterdiole werden dann mit einem der oben unter a) genannten Diisocyanate umgesetzt und anschließend mit den bereits unter a) erwähnten Hydroxylgruppen enthaltenden Acrylaten oder Methacrylaten zum Polyurethan(meth)acrylat umgesetzt. Eine oder mehrere dieser auf den speziellen Polyesterdiolen basierenden Polyurethan(meth)acrylate können im Gemisch mit Aktivatoren und gegebenenfalls weiteren üblichen Zusätzen als Klebstoffzusammensetzung eingesetzt werden.

Bei den Verbindungen der allgemeinen Formel (I) für den Fall; daß n = 3 ist, handelt es sich um Umsetzungsprodukte der oben genannten Hydroxylgruppen enthaltenden Acrylate oder Methacrylate mit Isocyanaten, die erhältlich sind durch Umsetzung von geeigneten 3 bis 6 Kohlenstoffatome enthaltenden, linearen oder verzweigten dreiwertigen Alkoholen (Triolen) mit Caprolacton und anschließender Reaktion mit Diisocyanaten.

Polycaprolactontriole sind nach an sich bekannten Verfahren erhältlich durch Ringöffnungspolymerisation von Caprolacton mit geeigneten Triolen, wobei das Verhältnis von Caprolacton zu Triol 1 bis 10 beträgt, also 3 bis 30 Mol Caprolacton mit einem Mol Triol umgesetzt werden.

Als Triole kommen insbesondere solche in Frage, die ausgewählt sind aus Glycerin, 1,2,4-Butantriol, Trimethylolpropan (2-Hydroxymethyl-2-ethyl-1,3-propandiol) und Trimethylolethan (2-Methyl-2-hydroxymethyl-1,3-propandiol).

Die Reaktionsprodukte aus dem Triol und dem Caprolacton werden anschließend nach dem Fachmann bekannten Verfahren mit den unter a) genannten Diisocyanaten umgesetzt. Anschließend wird das Reaktionsprodukt aus dem Triol, dem Caprolacton und dem Diisocyanat nach an sich bekannten Verfahren mit dem Hydroxylgruppen enthaltenden Acrylat oder Methacrylat zum Polyurethan(meth)acrylat umgesetzt.

Die Klebstoffzusammensetzung kann ferner ein oder mehrere Acrylat- oder Methacrylat-Comonomere enthalten. Diese Monomere sind ausgewählt aus Allylacrylat, Allylmethacrylat, Methylacrylat, Methylmethacrylat 2-Hydroxyethylacrylat, 2-Hydroxyethylmethacrylat, 2- oder 3-Hydroxypropylacrylat, 2- oder 3-Hydroxypropylmethacrylat, 6-Hydroxyhexylacrylat, 6-Hydroxyhexylmethacrylat, Benzylmethacrylat, Phenylethylmethacrylat, 2-Phenoxyethylmethacrylat, Morpholinoethylmethacrylat, Glycidylmethacrylat, Piperidylacrylamid, Neopentylmethacrylat, Cyclohexylmethacrylat, tert.-Butylmethacrylat und Tetrahydrofurfurylmethacrylat oder Gemischen davon. Auch Dimethacrylate, wie insbesondere TEGDMA, sind brauchbar.

Vorzugsweise enthält die erfindungsgemäße Zusammensetzung 20 bis 70 Gew.-% des Polyurethan(meth)acrylats sowie 80 bis 30 Gew.-% des (Meth)acrylat-Comonomeren, bezogen auf die Gesamtmenge der polymerisierbaren Verbindungen.

Die erfindungsgemäßen Klebstoffzusammensetzungen werden als radikalisch polymerisierbare Einkomponentensysteme eingesetzt. In jedem Fall kommt jedoch ein Starter- oder Aktivatorsystem zum Einsatz, welches die Polymerisation an olefinisch ungesättigten Systemen auslöst. Derartigen Aktivatoren ist die Fähigkeit immanent, durch Zutritt von Umgebungsluft aktivierbar zu sein, wobei diese Aktivierung in bevorzugten Ausführungsformen schon bei Raumtemperatur eintreten soll. Derartige Aktivatorsysteme bestehen in der Regel aus einer Starterkomponente und einer Beschleunigerkomponente.

Die erfindungsgemäße Zusammensetzung kann als 1K- oder 2K-System eingesetzt werden. Vorzugsweise wird sie als einkomponentiges Klebstoffsystem eingesetzt. Sie soll lagerstabil sein, in ihrer Applikationsform formbar, insbesondere pastös bis fließfähig sein und eine zur Verarbeitung hinreichende Topfzeit aufweisen, dann aber durch die einfache Einwirkung von Umgebungsluft formstabil aushärten. Die Einkomponentenklebstoffsysteme müssen bis zum Einsatz vor dem Zutritt von Luft geschützt gehalten werden.

Im Rahmen der Erfindung wurden Hydrazone als Starter oder -Hauptkomponente in Aktivatorsystemen für die Aushärtung der ungesättigten Verbindungen mittels Umgebungsluft eingesetzt. Die Hydrazonverbindungen werden bevorzugt mit im System wenigstens anteilsweise löslichen Metallverbindungen für die Beschleunigung eingesetzt.

Die erfindungsgemäß bevorzugt eingesetzten Hydrazonkomponenten entsprechen der nachfolgenden allgemeinen Formel III

R¹⁰R⁶C=N-NH-R⁷ (III)

In dieser Ausführungsform haben die Reste R¹⁰, R⁶ und R⁷ aus dieser allgemeinen Formel (III) die nachfolgende Bedeutung:

R¹⁰ ist ein geradkettiger, verzweigter oder cyclischer und gegebenenfalls substituierter Alkylrest oder ein gegebenenfalls substituierter Arylrest.

R⁶ kann in seiner Bedeutung gleich oder verschieden sein von dem Rest R¹⁰ und ist dabei Wasserstoff, ein geradkettiger, verzweigter oder cyclischer und gegebenenfalls substituierter Alkylrest oder ein gegebenenfalls substituierter Arylrest.

In einer besonderen Ausführungsform können die Reste R¹⁰ und R⁶ auch zusammen mit dem gemeinsamen substituierten C-Atom einen cycloaliphatischen Rest bilden, der auch substituiert sein kann.

Der Rest R⁷ ist wieder ein geradkettiger, verzweigter oder cyclischer und gegebenenfalls substituierter Alkylrest oder ein gegebenenfalls substituierter Arylrest.

Die Reste R¹⁰, R⁶ und R⁷ können insgesamt oder wenigstens anteilsweise gleich sein, jeder dieser Reste kann sich aber auch von den beiden anderen Resten in seiner Struktur unterscheiden. Als Alkylreste kommen insbesondere geradkettige und/oder verzweigte Alkylreste mit bis zu 40 C-Atomen, vorzugsweise bis zu etwa 20 C-Atomen, in Betracht. Cyclische Reste bestimmen sich in ihrer Mindestkohlenstoffzahl durch die Stabilität des jeweiligen Ringsystems. Eine bevorzugte Untergrenze liegt hier bei 5 und insbesondere bei 6 C-Atomen.

Die Reste R¹⁰, R⁶ und R⁷ können unsubstituiert oder substituiert sein. Zu berücksichtigen ist hier, daß durch Substitution dieser Reste und insbesondere des Restes R⁷ ein gewisser Einfluß auf die Reaktivität des Aktivatorsystems genommen werden kann. Liegt beispielsweise als Rest R⁷ ein aromatisches System, insbesondere ein Phenylrest vor, so kann durch geeignete Substitution dieses Phenylrestes eine Reaktionsbeschleunigung dadurch erreicht werden, daß an sich bekannte elektronenschiebende Substituenten an diesem Phenylrest in R⁷ vorgesehen werden.

Elektronenschiebende und damit reaktionsbeschleunigenden Substituenten sind beispielsweise Alkyl-, Alkoxy- und/oder Halogensubstituenten am Phenylrest in R⁷, umgekehrt wirken stark elektronenziehende Substituenten von der Art der -NO₂-Gruppe verlangsamend auf den Reaktionsablauf ein. Zu solchen elektronenschiebenden bzw. elektronenziehenden Effekten durch Substitution und zur Struktur der jeweiligen Substituenten besteht umfangreiches allgemeines Fachwissen, auf das hier verwiesen wird.

Für weitere Einzelheiten und insbesondere hinsichtlich der Herstellung dieser Hydrazone wird auf die WO-A-91/10687 verwiesen.

Ferner können Hydrazone folgender allgemeiner Formel

Ph(-C(R⁸)=N-NHR⁹)_{q}

eingesetzt werden,
wobei
- q: eine Zahl von 1 bis 3
- R⁸: H oder eine Alkylgruppe mit bis zu 40 C-Atomen ist und
- R⁹: unabhängig von den übrigen Substituenten H oder eine aromatische oder aliphatische Gruppe mit bis zu 40 C-Atomen ist.

Diese Hydrazon-Verbindungen sind mono-, di- oder trifunktionell. Die Reste R⁸ und R⁹ sind vorzugsweise lineare und/oder cyclische Alkylgruppen mit bis zu 40 C-Atomen, insbesondere mit 3 bis 8 C-Atomen. Mindestens ein R⁹-Rest pro Molekül sollte eine solche Alkylgruppe sein. Die Reste R⁸ und R⁹ können unsubstituiert oder substituiert sein. Zu berücksichtigen ist hierbei, daß durch die Substitution dieser Reste, insbesondere des Restes R⁹, ein gewisser Einfluß auf die Reaktivität des Aktivatorsystems genommen werden kann. Liegt beispielsweise ein aromatisches System, insbesondere ein Phenylrest vor, so kann durch geeignete Substitution dieses Phenylrestes eine Reaktionsbeschleunigung dadurch erreicht werden, daß an sich bekannte Elektronen-schiebende Substituenten an diesem Phenylrest in R⁹ vorgesehen werden.

Elektronenschiebende und damit reaktionsbeschleunigende Substituenten sind beispielsweise Alkyl-, Alkoxy- und/oder Halogensubstituenten am Phenylrest in R⁹. Umgekehrt wirken stark elektronenziehende Substituenten von der Art der -NO₂-Gruppe verlangsamend auf den Reaktionsablauf ein. Zu solchen elektronenschiebenden bzw. elektronenziehenden Effekten durch Substitution und zur Struktur der jeweiligen Substituenten besteht umfangreiches allgemeines Fachwissen, auf das hier verwiesen wird.

Auch dem Rest R⁸ aus der allgemeinen Formel kann durch Wahl der jeweiligen Konstitution und der gegebenenfalls vorgesehenen Substitution die Geschwindigkeit des Reaktionsablaufes beeinflussende Wirkung zukommen.

Zur außerordentlichen Vielgestaltigkeit für die bestimmte Beschaffenheit der Reste R⁸ und R⁹ aus den Verbindungen der allgemeinen Formel gibt die US-PS-4 010 152 mit ihren Formelbildern aus den Spalten 6 bis 14 Aufschluß. Dargestellt sind hier die Hydrazonverbindungen bereits in Form ihrer Hydroperoxide, wie sie sich auch erfindungsgemäß im Reaktionsablauf in situ bei Zutritt von Luftsauerstoff bilden. Die umfangreichen Angaben dieser zuletzt genannten Druckschrift zu der bestimmten Beschaffenheit der Hydrazonverbindungen bzw. der aus ihnen in situ entstehenden Hydroperoxide gelten für die Lehre der Erfindung im Zusammenhang mit der Definition der Verbindungen der allgemeinen Formel. Aus Zweckmäßigkeitsgründen wird auf diese ausführliche druckschriftliche Darstellung im Zusammenhang mit der Erfindungsbeschreibung Bezug genommen. Selbstverständlich kann der Benzol-Ring noch weitere Substituenten enthalten, wenn sie die Starter-Funktion nicht stören.
Konkrete Beispiele sind: Acetophenon-methylhydrazon (q = 1, R⁸ = R⁹ = CH₃), Acetophenon-t-butylhydrazon (q = 1, R⁸ = CH₃, R⁹ = C(CH₃)₃).

Für weitere Einzelheiten und insbesondere hinsichtlich der Herstellung dieser Hydrazone wird auf die WO-A-93/01218 verwiesen. Die im System wenigstens anteilsweise lösliche Metallverbindungen zeichnen sich dadurch aus, daß vor allem Metallverbindungen solcher Metalle eingesetzt werden, die in mehreren Wertigkeitsstufen auftreten können. Besonders aktiv können hier ausgewählte Vertreter der Übergangsmetalle sein. Der jeweiligen Auswahl des Metalls kann unter anderem geschwindigkeitsbestimmender Charakter zur Polymerisationsauslösung zukommen. Bei Raumtemperatur hochaktive Komponenten leiten sich z.B. vom Kupfer, Kobalt, Vanadium und/oder Mangan ab. Verbindungen des Eisens kommt allerdings eine besondere Bedeutung und gute Reaktionsbeschleunigung zu.

Für das für viele Anwendungsgebiete besonders vorteilhafte Arbeiten bei Raumtemperatur eignen sich insbesondere Eisen-, Kobalt- und/-oder Manganverbindungen, gegebenenfalls in Abmischung mit weiteren metallischen Komponenten wie Verbindungen des Blei, Cer, Calcium, Barium, Zink und/oder Zirkon. Es kann hier auf die einschlägige Fachliteratur verwiesen werden, vergleiche beispielsweise die Veröffentlichung in "Ullmann Encyklopädie der technischen Chemie", 4. Auflage, Band 23 (1983), Seiten 421 bis 424 sowie die dort zitierte Literatur.

Die hier betroffenen Metalle werden in Form solcher Verbindungen eingesetzt, daß sie wenigstens anteilsweise im Gesamtsystem löslich sind. Es kommen dabei sowohl seifenartige Metallverbindungen als auch in anderer Form insbesondere komplex an organische Reste gebundene Typen in Betracht. Typische Beispiele für das Arbeiten im Sinne des erfindungsgemäßen Handelns ist die Verwendung entsprechender Metallnaphthenate bzw. Metallacetylacetonate. Besteht eine hinreichende Löslichkeit von anorganischen Salzen im System dann ist allerdings auch die Verwendung solcher anorganischer Systeme möglich. Ein typisches Beispiel hierfür ist das Eisenchlorid, das bei seinem Einsatz im erfindungsgemäßen System eine deutlich beschleunigende Wirkung zeigt.

Es kann zweckmäßig sein, die Metallverbindungen jeweils in- einer niedrigen Wertigkeitsstufe des Metalls - beispielsweise also als Kobalt (II) oder Mangan (II) - einzusetzen. In anderen Fällen eignet sich auch die Verwendung der Metallverbindung in der höheren Wertigkeitsstufe des Metalls. So kann beispielsweise Eisen auch in Form der Fe³⁺-Verbindungen verwendet werden.

Reduktionsmittel mit Beschleuniger-Wirkung können gewünschtenfalls als Aktivatorkomponente mitverwendet werden. Diese werden in üblichen Redoxsystemen zur Polymerisationsauslösung eingesetzt. Verwiesen wird auf die einschlägige umfangreiche Literatur, beispielsweise W. Kern, Makromol. Chem. 1, 249 (1947) sowie C. Srna, Angew. makromol. Chem. 9, 165 (1969) sowie das allgemeine Fachwissen, wie es z.B. beschrieben ist in Houben Weyl "Methoden der organischen Chemie" Band 14/1, 263 bis 297.

Als besonders aktiv hat sich hier die Klasse der Alpha-Hydroxyketone, beispielsweise mit ihren Vertretern Butyroin, Benzoin oder Azetoin erwiesen. Wesentlich ist, daß diese Stoffklasse in den erfindungsgemäß eingesetzten Aktivatorsystemen zwar eine wichtige reaktionsbeschleunigende Funktion übernehmen können, daß jedoch ihre Mitverwendung nicht zwingend ist.

Starter bzw. Aktivatorsysteme aus den hier geschilderten Hauptkomponenten Hydrazonverbindung, wenigstens anteilsweise löslicher metallischer Trockenstoff und/oder gewünschtenfalls mitverwendeter Beschleuniger können anstelle der peroxidischen Startersysteme eingesetzt werden.

In den Zusammensetzungen der Erfindung machen die Peroxid- und Hydrazon-Aktivatorgemische bevorzugt nicht mehr als etwa 15 Gew.-% und insbesondere nicht mehr als etwa 10 Gew.-%, jeweils bezogen auf das Gesamtsystem aus. Je nach Aktivität der eingesetzten Komponenten kann dabei das Gewicht des Aktivatorgemisches sehr stark abgesenkt werden und beispielsweise bis in den Bereich von etwa 0,1 Gew.-% oder wenigstens etwa 0,5 Gew.-% verringert werden. Besonders geeignet können Mengen des Aktivatorsystems von wenigstens etwa 1 Gew.-%, bevorzugt bis zu etwa 8 Gew.-% sein.

Die drei zuvor genannten Komponenten des Hydrazon-Aktivatorsystems können dabei vorzugsweise in den folgenden Mengenverhältnissen eingesetzt werden:

Hydrazon-Verbindungen: wenigstens etwa 0,1 Gew.-%, zweckmäßig 0,5 bis 7,5 Gew.-%, vorzugsweise 1 bis 4 Gew.-% Metall aus löslicher Metallverbindung: 0 bis einige Gew.-%, zweckmäßig etwa 50 ppm bis 1 Gew.-%, vorzugsweise mehr als 100 ppm, z.B. 1000 bis'5000 ppm Reduktionsmittel: 0 bis 5 Gew.-%, vorzugsweise 1 bis 3 Gew.-%, jeweils bezogen auf das Gesamtgemisch.

Zur Steuerung des Reaktionsablaufs und/oder der offenen Topfzeit können in an sich bekannter Weise Inhibitoren und/oder Stabilisatoren gegen vorzeitige Auslösung der radikalischen Reaktion mitverwendet werden. Ihre Menge bemißt sich nach dem angegebenen Zweck. Sie kann im Einzelfall durch fachgerechte Überlegungen und/oder durch Vorversuche einfach ermittelt werden. Die mitverwendeten Stabilisatoren werden üblicherweise wenige Prozent - z.B. etwa 2 bis 5 Gew.-% - des Gesamtgemisches nicht überschreiten und liegen im allgemeinen unterhalb 1 Gew.-%, bezogen auf das Gesamtgemisch.

Die Erfindung erlaubt jeweils die Zusammenstellung optimierter Klebstoffzusammensetzungen. Unter Wahrung der erfindungsgemäßen Gesetzmäßigkeiten können lösliche und/oder unlösliche Füllstoffe, Elastifizierungsmittel, Verdickungsmittel, Thixotropierungsmittel, Pigmente, Haftvermittler, Stabilisatoren und dergleichen mitverwendet werden, ohne daß die Funktionsfähigkeit der erfindungsgemäßen Zusammensetzungen gefährdet ist. Voraussetzung hierfür ist natürlich, daß durch Auswahl der Hilfs- und Füllstoffe sichergestellt ist, Störungen in der Interaktion der Aktivatorkomponenten auszuschließen. Hierzu gilt allgemeines chemisches Wissen.

Zur Inhibierung der erfindungsgemäßen Systeme stehen in an sich bekannter Weise mehrere Mechanismen zur Verfügung. Genannt seien die beiden folgenden Grundtypen:
1. Stabilisierung gegen O₂, Zusatz von Antioxidantien und
2. Stabilisierung gegen Radikale, Zusatz von Radikalinhibitoren.

Aus dem allgemeinen chemischen Wissen seien im nachfolgenden typische Stabilisatorkomponenten aufgezählt, wobei jeweils in Klammern hinter der speziellen Verbindung angegeben ist, welchem Mechanismus der Stabilisator zuzuordnen ist:

Pyrogallol (1), O₂-inhibierte Acrylate (1), Hydrochinon (1,2), Hydrochinonmonomethylether (1,2), Butylhydroxytoluen (2) und Phenothiazin (2). Besondere Bedeutung zur Stabilisierung des Systems gegen unerwünschte vorzeitige Abreaktion kann Verbindungen vom Typ des Triphenylphosphins sowie NaI und I₂ zukommen.

Die erfindungsgemäße Zusammensetzung kann als aerob härtendes Klebstoffsystem, streichfähiges Mittel für die Oberflächenbeschichtung mit polymerisierbaren insbesondere lösungsmittelfreien Lacken und Anstrichmittel im Sinne von streichfähigen lufttrocknenden Lacksystemen, für die Herstellung von Formteilen unter Reaktionsauslösung durch Einwirkung von Umgebungsluft, beispielsweise auf Basis von Styrol/ungesättigte Polyesterharze sowie als Dichtungsmasse und als Zusatz zu Tinten und Druckfarben verwendet werden.

Zur Herstellung der erfindungsgemäßen Zusammensetzungen werden die radikalisch polymerisierbaren Verbindungen mit dem Aktivatorsystem und den gegebenenfalls weiteren Zusätzen in den gewünschten Anteilen in einer Rührapparatur homogenisiert. Bei Einkomponentenklebstoffzusammensetzungen ist darauf zu achten, daß das Homogenisieren unter Ausschluß von Luftsauerstoff stattfindet. Hierzu hat es sich als zweckmäßig erwiesen, die Rührapparatur mit den polymerisierbaren Verbindungen vor dem Zusatz der letzten Aktivatorkomponente (bei Härter- Beschleunigerkombinationen) zu evakuieren und dann mit Stickstoff zu belüften. Dieser Vorgang kann gegebenenfalls mehrfach wiederholt werden.

Die erfindungsgemäßen Zusammensetzungen sind flüssig oder pastös und deren ausgehärtete Massen weisen eine gute Kälte-, Wärme- und Feuchtigkeitsbeständigkeit auf. Bei Langzeitlagerung wurden unter Berücksichtigung des Trübungs- und Klarpunktes positive Eigenschaften (keine Kristallisation, Verfärbung und Entmischung) festgestellt und weisen auf Glas, Keramik, Metallen, Kunststoffen sowie Cellulose enthaltenden Materialien, wie Holz oder Papier eine hervorragende Adhäsion auf. Dies zeigt sich insbesondere durch die ermittelten Zugscherfestigkeiten auf Eisenblechen nach DIN 53281 (Herstellung der Prüfkörper) und DIN 52283 (Ermittlung der Zugscherfestigkeit).

Bei Kunststoffen wie PE, PP, POM, PA, PS, SAN und PMNA kann die Zugscherfestigkeit noch durch eine Vorbehandlung erhöht werden. Dazu eignet sich insbesondere eine Plasma-, Corona- oder Flamm- Vorbehandlung des z.B. mit Ethanol entfetteten Werkstoffes. Die Bedingungen für eine Niederdruck-Plasma Vorbehandlung sind z.B. GHz-Prozessor mit 300 W Leistung, Prozeßgas: Sauerstoff, Druck: 0,2 mbar, Zeit: 5 Minuten.

Die erfindungsgemäßen Zusammensetzungen, die sich je nach Gehalt an Comonomer auf unterschiedliche Viskositäten einstellen lassen, wurden herangezogen um aerob härtende 1K-Reaktivklebstoffe herzustellen. Als Starter erwies sich Acetophenon-tert.-butylhydrazon als am besten geeignet. In den Beispielen wurden durch die Verwendung von Natriumiodid, Iod und Eisenacetylacetonat lagerstabile Klebstoffe hergestellt und in Zugscherversuchsreihen an Standardwerkstoffen [Stahl, Aluminium, Kupfer, Messing, Glas, Keramik, Holz (Limba, Balsa, Buche, Fichte), Hart-PVC, PC, ABS] geprüft. Zur Überprüfung auf Eignung als "1K-Verbundklebstoff" wurden diverse Zugscherversuchsreihen durchgeführt. Die Prüfungen auf Spaltüberbrückung und Alterungsbeständigkeit (Wärmebeständigkeit, Feuchtklima- und Wechselklima-Test) verliefen ebenfalls positiv. Die in den Beispielen aufgeführten Zugscherversuchsreihen nach DIN-Vorschrift zeigen, daß das entwickelte Klebstoffsystem für ein breites Anwendungsgebiet geeignet ist.

Besondere Beachtung verdient jedoch die Anwendung der erfindungsgemäßen Klebstoffsysteme für die Herstellung von Stereoanlagen -insbesondere Lautsprechern. Diese Anwendung wurde durch Verklebung von Musterteilen überprüft, da die papiergefertigte Trichtermembran und die phenolfomaldehydharzgetränkte Baumwoll-Dämpfung bzw. -Zentrierung aus saugfähigen und flexiblen Materialien besteht. Diese Werkstoffe können nicht nach DIN-Vorschrift im Zugscherversuch geprüft werden. Zur Überprüfung auf Eignung des Klebstoffes wurde ein Mittelton-Lautsprecher manuell gefertigt. Die vorgenommenen Verbundverklebungen - Aluminium-Schwingspule/phenolformaldehydharzgetränkte Baumwoll-Zentrierung, Aluminium-Korb/Sicke, Aluminium-Korb/phenolformaldehydharzgetränkte Zentrierung, papiergefertigte Trichtermembran/ Aluminiumschwingspule, kupfergefertigte Litzendrähte/ papiergefertigte Trichtermembran - wurden ohne negativen Befund manuell untersucht. Digitale Verstärkeranlagen führen zu hochbelasteten Lautsprechern, die dann zu einer hohen Wärmebelastung an der Schwingspule und an dem Trichtermembranhals führen, insbesondere wenn die Schwingspule aus Aluminium besteht. Diese Verklebung wurde deshalb unter Temperaturbelastung im Trockenschrank (3h/180°C) geprüft. Nach Abkühlung auf Raumtemperatur wurde die Verklebung einer manuellen Zugbelastung - unter Beobachtung von Materialbruch der Membran - ausgesetzt. Die hochfeste und dennoch flexible Klebfuge ermöglicht auch den Einsatz am Magnetsystem des Lautsprechers.

Die Erfindung betrifft ferner die Verwendung der erfindungsgemäßen Klebstoffzusammensetzung durch welche es möglich ist, die für die Aktivierung des Klebstoffes notwendigen Luftkontaktzeiten (LKZ, Zeit die benötigt wird, um Sauerstoff aus der Umgebungsluft aufzunehmen) weiter zu verkürzen und somit kürzere Taktzeiten zu erzielen. Demgemäß betrifft die Erfindung die Verwendung der erfindungsgemäßen Zusammensetzung zum Verkleben von Werkstoffen mit der erfindungsgemäßen aerob härtenden Klebstoffzusammensetzung, gekennzeichnet durch
- Auftragen der Klebstoffzusammensetzung auf wenigstens eine der miteinander zu verbindenden Oberflächen der Werkstoffe,
- Erwärmen der Werkstoffe an der mit der Klebstoffzusammensetzung versehenen Oberfläche während des Kontaktes der Klebstoffzusammensetzung mit Luftsauerstoff auf eine Temperatur von 20-80 °C, vorzugsweise von 40-50 °C,
- Verbinden der Werkstoffe an den Oberflächen miteinander,
- Aushärtenlassen der Klebstoffzusammensetzung.
Die Erwärmung des Werkstoffes kann wie beschrieben nach dem Auftragen der Klebstoffzusammensetzung erfolgen, aber auch bereits vor dem Auftragen des Klebstoffes.

Die Wärmezufuhr kann mit üblichen, dem Fachmann bekannten Wärmequellen erfolgen. Als besonders vorteilhaft in der praktischen Anwendung hat sich jedoch der Einsatz von Infrarot-Licht (z.B. 250 W, Osram) erwiesen.

Reproduzierbare Zugscherfestigkeiten werden beispielsweise dann erhalten, wenn die Bestrahlungsdauer von 30-60 sek. mit dem Abstand der Lampe (5-20 cm) und den Absorptionseigenschaften der zu verklebenden Prüfkörpern (z.B. Aluminium, Stahl, PVC, PC, ABS, etc) korreliert wird. Die Lampe muß so justiert sein, daß die Temperatur der Prüfkörper während der Bestrahlungsdauer auf 20-80°C, vorzugsweise 25-50°C ansteigt. Neben der Verringerung der Luftkontaktzeit wird auch eine schnellere Aushärtung bei gleichbleibendem Eigenschaftsprofil des Klebstoffes beobachtet.

Natürlich kann auch anstelle des Werkstoffes der Klebstoff selbst erwärmt werden. Das geschieht zweckmäßigerweise durch Erwärmen der Dosierspitze.

Die vorliegende Erfindung betrifft ferner die Verwendung der erfindungsgemäßen Zusammensetzung in einem System zur Lagerung und Dosierung dieser Zusammensetzung, bestehend aus
- einem flexiblen Behälter (5,14) aus einem luftundurchlässigen Material,
- einer daran angebrachten Produktaustrittsöffnung und einem Abgabeventil,
- einem den flexiblen Behälter umschließenden und mit Produktdurchtrittsöffnung versehenen Druckbehälter (7,12),
- gegebenenfalls an den Druckbehälter angebrachten Anschlüssen für die Druckbeaufschlagung des Druckbehälters,
- Steuergeräten und Dosiereinrichtungen,
wobei die Reaktivklebstoffzusammensetzung in dem flexiblen Behälter (5,14) enthalten ist.
Diese Anordnung stellt sicher, daß kein Luftsauerstoff aus der Umgebung oder der Druckluft in den flexiblen, sauerstoffundurchlässigen Kunststoffbehälter eindringt.

Gemäß einer Ausführungsform des Systems wird der flexible Kunststoffbehälter mit einer Halterung in den Druckbehälter hineingestellt oder gehängt. So wird ein Zusammenfallen des Gebindes verhindert. Die Herstellung der Verbindung zwischen Gebinde und Behälterdeckel erfolgt mittels eines verschraubbaren Adapters. Dadurch wird ein direkter Abschluß zur Druckluft und Umgebung erzielt. Am Produktbehälter-Ausgang können die sonst üblichen Verschraubungen, Schläuche und Ventile weiterhin eingesetzt werden.

Für die problemlose Verarbeitung der Kleb- und Dichtstoffe muß je nach Aushärtungsmechanismus das geeignete Kunststoffgebinde ausgewählt werden. Luftaktivierbare Klebstoffe müssen aus sauerstoffundurchlässigen Kunststoffgebinden (z.B. EVAL F) dosiert werden.

In einer weiteren Ausführungsform besteht das System aus einer Tube aus einem luftundurchlässigen Material (z.B. Al), welche den aeroben Klebstoff enthält. Die Tube ist mit den entsprechenden Gewinden versehen um mit einem Adapter für Produktaustritt verschraubt zu werden. Die mit dem Adapter versehene Tube wird dann in einen Kartuschenbehälter hineingeschoben, welcher mit Druck beaufschlagt werden kann.

In einem besonderen Beispiel erfolgt die Ansteuerung des Dosierventils elektropneumatisch mit einem Dosiergerät (DG-combi 1,5 bar, DS 1 DS-compact; Fa. Lang). Verwendet wird ein 310 ml-Kartuschendruckbehälter (Typ Winchester; Fa. Cox). Der Adapter (Material POM) wird als Übergangsstück zwischen der Tube und dem Produktschlauch eingesetzt. Das Innengewinde des Adapters muß auf das Außengewinde der Tube abgestimmt sein. Außerdem bildet der Adapter den Abschluß zum Vorratsdruckbehälter. Der Produktschlauch und die Tube muß auf den zu verarbeitenden Klebstoff abgestimmt sein (aerobe Klebstoffe, sauerstoffundurchlässig). Die Dosierventile sind pneumatisch betätigte Membranventile (Tropfen- und Raupen-Applikation), volumetrische Dosierventile und Sprühventile für großflächigen Klebstoffauftrag.

Die vorliegende Erfindung wird durch die nachfolgenden Beispiele näher beschrieben, ohne jedoch darauf beschränkt zu sein.

### Beispiele

### I) Herstellung der Polvesterdiole

### Beispiel 1:

446,6 g Dimerdiol (hydrierte Dimerfettsäure) und 60 g Bernsteinsäureanhydrid werden mit 50 g Xylol und 0,5 g Sn(II)octoat werden für 7 Stunden am Wasserabscheider auf 185°C erhitzt. Anschließend wird das Xylol im Wasserstrahlvakuum abdestilliert, wobei die Badtemperatur bis aus 210°C erhöht wird. Das so erhaltene Produkt weist eine Säurezahl (SZ) von 0,9 und eine OH-Zahl (OHZ) von 47 auf, was einem mittleren Molekulargewicht von 2400 entspricht. Gehalt: 78,53 %C 12,08 %H 9,39 %0 C:0=8,36; C:H=6,5

### Beispiel 2:

446,6 g Dimerdiol, 70 g Bernsteinsäureanhydrid und 0,5 g Sn(II)-octoat werden analog Beispiel 5 umgesetzt. Das resultierende Polyesterdiol weist eine SZ von 1,7, eine OHZ von 25 und ein mittleres Molekulargewicht von 4500 auf.
Gehalt: 78,19 %C 11,92 %H 9,89 %0 C:0=7,9; C:H=6,56

### Beispiel 3:

97,5 g Hexandiol und 400,7 g Dimerfettsäure VD 288 werden mit 100 g Xylol und 0,5 g Sn(II)octoat 7 h bei 195°C am Wasserabscheider erhitzt. Anschließend wird das Xylol abdestilliert, das resultierende Polyesterdiol weist eine SZ von 0,1 eine OHZ von 19,1 und ein mittleres Molekulargewicht von 5900 auf.
Gehalt: 77,62 %C 12,15 %H 10,23 %0 C:0=7,6; C:H=6,4

### Beispiel 4:

97,5 g Hexandiol-1,6 und 343,5 g Dimerfettsäure werden analog Beispiel 7 umgesetzt. Das Polyesterdiol weist eine SZ von 0,3, eine OHZ von 55 und ein mittleres Molekulargewicht von 2000 auf.
Gehalt: 76,99 %C 12,14 %H 10,88 %0 C:0=7,08; C:H=6,34

### Beispiel 5:

118,2 g Hexandiol, 626 g Polyethylenglykol (MW 600) und 858 g Dimerfettsäure werden analog den Beispielen 7 und 8 umgesetzt. Das Polyesterdiol hat eine SZ von 1,2, eine OHZ von 37 und ein mittleres Molekulargewicht von 3000.
Gehalt: 68,5 %C 10,78 %H 20,73 %0 C:0=3,3; C:H=6,35

### Beispiel 6:

446,6 g Dimerdiol, 84,9 g Diethylenglykol, 140,1 g Bernsteinsäureanhydrid und 0,7 g Sn(II)octoat werden analog den Beispielen 5 und 6 umgesetzt. Das resultierende Polyesterdiol hat eine SZ von 2,0, eine OHZ von 31 und ein mittleres Molekulargewicht von 3200.
Gehalt: 71,94 %C 10,73 %H 17,33 %0 C:O=4,15; C:H=6,7

### Beispiel 7:

718 g (1,33 mol) Dimerdiol, 570 g (1 mol) Dimerfettsäure und 0,6 g Sn(II)octoat werden auf 150°C erhitzt. Innerhalb von 6 h wird die Temperatur auf 225°C gesteigert, wobei ab der 2. Stunde ein Vakuum von 1,333 kPa (100 Torr) angelegt wird. Nach 6 h wird für weitere 8 h im Ölpumpenvakuum auf 240°C erhitzt. Nach beendeter Reaktion weist das erhaltene Polyesterdiol eine Säurezahl von 0,5, eine OH-Zahl von 31 und ein mittleres Molekulargewicht von 36000 auf.
Gehalt: 81,2 %C 12,77 %H 6 %0 C:0=13,5; C:H=6,36

### II) Herstellung der Polvurethanmethacrylate (PUMA):

### Allgemeine Herstellvorschrift:

0,2 mol eines Polyesterdiols werden auf 45°C erhitzt. Dazu werden innerhalb von 5 min. 0,4 mol eines Diisocyanates, z.B. Desmodur T 100 (2,4-Toluendiisocyanat (TDI), Handelsprodukt der Firma Bayer, Leverkusen) zugegeben, wobei die Temperatur auf maximal 55°C gehalten wird. Es werden weitere 15 min. auf 55-60°C erhitzt, bis der NCO-Gehalt der Mischung 50% des Ausgangswertes erreicht hat. Dann werden 0,2 mol Hydroxypropylmethacrylat (HPMA) zugegeben und die Mischung auf 80°C erhitzt, bis der NCO-Gehalt unter 0,1 % gesunken ist. Es resultiert eine 80 %ige Lösung des PUMA in überschüssigem HPMA.

### III) Allgemeine Herstellvorschrift für einkomponentige Reaktionsklebstoffe:

37,5 Gew.-Teile Methacrylat-Monomer, 62,5 Gew.-Teile PUMA, 0,5 Gew.-Teile JPA 514, 1 Gew.-Teil Eisen(III)acetylacetonat und 0,1 Gew.-Teile Natriumiodid werden in einer Rührapparatur homogenisiert, evakuiert und anschließend mit Stickstoff belüftet. Zum völligen Ausschluß von Sauerstoff wird dieser Vorgang noch zweimal wiederholt. Dann werden im Stickstoffgegenstrom 3 Gew.-Teile Acetophenon-tert.-butylhydrazon zugegeben und die Mischung nochmals unter Rühren evakuiert und mit Stickstoff belüftet.
Acetophenon-methylhydrazon kann anstelle des entsprechenden tert.-Butylhydrazons verwendet werden.

### IV) Herstellung von Polyurethanmethacrylaten:

### a) Polyurethanmethacrylat-Gemische auf Polycaprolactondiol- und -triolbasis

| Edukte: | |
|---|---|
| 540 g (1 mol) | Polycaprolactontriol, MW 540 (CAPA 305, Handelsprodukt der Firma Solvay) |
| 1376 g (0.65 mol) | Polycaprolactondiol, MW 2000 (CAPA 220, Handelsprodukt der Firma Solvay) |
| 748 g (4.3 mol) | 2,4-Toluendiisocyanat (Desmodur T 100, Handelsprodukt der Firma Bayer) |
| 1430 g (9.9 mol) | Hydroxypropylmethacrylat (HPMA 97, Handelsprodukt der Firma Röhm) |
| 1.23 g | Hydrochinonmonomethylether (Handelsprodukt der Firma Fluka) |

### Herstellvorschrift:

Die Polyole werden in einer Rührapparatur vorgelegt und auf 50°C erhitzt. Das Toluendiisocyanat (TDI) wird innerhalb von 30 min. zugetropft, wobei die Temperatur der Mischung 55°C nicht übersteigt. Nach beendeter Zugabe wird für 45 min. auf 60°C erhitzt, bis der NCO-Gehalt einen Wert von 6,8 % erreicht hat. Es werden der Hydrochinonmonomethylether und das HPMA zugegeben und die Mischung solange auf 80°C erhitzt, bis der NCO-Gehalt < 0,1% ist.
Es handelt sich bei dem Reaktionsprodukt um eine 80 %ige Lösung des Polyurethan(meth)acrylates in (überschüssigem) HPMA.

### b) Polyurethanmethacrylat auf Polytetrahydrofurfuryldiolbasis:

767 g Polytetrahydrofurfuryldiol mit einem Molekulargewicht von 650 werden in einer Rührapparatur vorgelegt und auf 50°C erhitzt. Dazu werden 150 g 4,4'-Diisocyanantodiphenylmethan (Desmodur 44 M, Handelsprodukt der Firma Bayer AG) gegeben und die Mischung solange auf 90°C erhitzt, bis der NCO-Gehalt = O ist. Dann werden 209 g 2,4-Toluendiisocyanat (Desmodur T, Handelsprodukt der Firma Bayer AG) zugegeben und das Reaktionsgemisch für eine Stunde auf 60°C erwärmt, bis der theoretische NCO-Gehalt von 4,5 erreicht ist. Es werden 173 g Hydroxypropylmethacrylat zugefügt und die Mischung solange auf 80°C erhitzt, bis der NCO-Gehalt < 0,1% ist.

### V) Eigenschaften der aeroben Klebstoffzusammensetzungen

Nachfolgende Klebstoffzusammensetzungen werden hergestellt:
1)
   40 Gew.-% Benzylmethacrylat
   12 Gew.-% Hydroxypropylmethacrylat
   48 Gew.-% Polyurethanmethacrylat nach IVa)
2)
   40 Gew.-% Tetrahydrofurfurylmethacrylat
   12 Gew.-% Hydroxypropylmethacrylat
   48 Gew.-% Polyurethanmethacrylat nach IVa)
3)
   15 Gew.-% Benzylmethacrylat
   37 Gew.-% Hydroxypropylmethacrylat
   48 Gew.-% Polyurethanmethacrylat nach IVa)
4)
   25 Gew.-% Benzylmethacrylat
   27 Gew.-% Hydroxypropylmethacrylat
   48 Gew.-% Polyurethanmethacrylat nach IVa)
5)
   52 Gew.-% Hydroxypropylmethacrylat
   48 Gew.-% Polyurethanmethacrylat nach IVb)

Alle diese Grundgemische enthalten zusätzlich Acetophenon-tert.-butylhydrazon als Starter sowie weitere übliche Zusatzstoffe.

Die Zusammensetzungen wurden hinsichtlich ihrer Klebeeigenschaften beim Verkleben gleicher und verschiedener Substrate (Verbundverklebungen) untersucht (DIN 53281, 53282 und 53283). 3 Tropfen der Klebstoffzusammensetzung (ca. 60 mg) wurden einseitig auf das Substrat aufgetragen und nach einer Luftkontaktzeit (LKZ in Minuten) gefügt.
Die angegebenen Meßwerte sind Mittelwerte, die aus wenigstens 5 Messungen ermittelt wurden. "KB" bedeutet Kohäsionsbruch, "MB" bedeutet Materialbruch. Die Zeitangaben für die Lagerung beziehen sich auf die Lagerzeit der verklebten Substrate. Die nachfolgenden Tabellen 1 und 2 geben die Ergebnisse wieder.

**Tabelle 1**

| Eignung als Klebstoff | | | | |
|---|---|---|---|---|
| In den nachfolgenden Beispielen wurde jeweils die Zusammensetzung 1) (6 Wochen bei RT gelagert) eingesetzt. | | | | |

| | N (Mittelwert) | N/mm² (Mittelwert) | Bruch | Durchhärtung |
|---|---|---|---|---|
| Alu.: sandgestrahlt (n. 72h - Lagerung) | 3630 | 14,5 | KB | i.O. |
| Standardabweichung: | +/- 101,2 | +/- 0,4 | | |
| | | | | |
| Stahl: sandgestrahlt (n. 3 h 80°C - Lagerung) | 5488 | 22,0 | KB | i.O. |
| Standardabweichung: | +/- 117,5 | +/- 0,5 | | |
| | | | | |
| Stahl: sandgestrahlt (n. 72 h - Lagerung | 4946 | 19,8 | KB | i.O. |
| Standardabweichung: | +/- 229,7 | +/- 0,9 | | |
| | | | | |
| Stahl: sandgestrahlt (n. 72 h + 3 h 80°C Lagerung) | 4514 | 18,1 | KB | i.O |
| Standardabweichung | +/- 316,0 | +/- 1,3 | | |
| | | | | |
| ABS: glatt (n. 72 h - Lagerung) | 2350 | 9,4 | MB | |
| Standardabweichung | +/- 94,4 | +/- 0,4 | | |
| | | | | |
| PVC: glatt (n. 72 h - Lagerung) | 1968 | 7,9 | MB | |
| Standardabweichung | +/- 231,2 | +/- 0,9 | | |
| | | | | |
| PC: glatt (n 72 h - Lagerung) | 1870 | 7,5 | MB | |
| Standardabweichung | +/- 166,4 | +/- 0,7 | | |
| | | | | |
| Verbundverklebung: Stahl: sandge. / ABS: glatt (n. 3 h 80°C - Lagerung) | 3750 | 11,0 | KB | i.O. |
| Standardabweichung | +/- 149,8 | +/- 0,6 | | |
| | | | | |
| Verbundverklebung: Stahl: sandge. / PVC: glatt (n 3 h 80°C - Lagerung) | 2272 | 9,1 | MB | i.O. |
| Standardabweichung | +/- 334,0 | +/- 1,3 | | |
| | | | | |
| Verbundverklebung: Stahl: sandge. / PC: glatt (n. 3 h 80°C - Lagerung) | 2356 | 9,0 | MB | i.O. |
| Standardabweichung | +/- 504,1 | +/- 2,0 | | |
| | | | | |
| Verbundverklebung: Alu.: sandge. / ABS: glatt (n. 3 h 80°C - Lagerung) | 1991 | 8,0 | KB | i.O. |
| Standardabweichung | +/- 163,3 | +/- 0,6 | | |
| | | | | |
| Verbundverklebung: Alu.: sandge. / PVC: glatt (n. 3 h 80°C - Lagerung) | 2118 | 8,5 | KB | i.O. |
| Standardabweichung | +/- 113,7 | +/- 0,4 | | |
| | | | | |
| Verbundverklebung: Alu.: sandge. / PC: glatt (n. 3 h 80°C - Lagerung) | 1738 | 7,0 | KB | i.O. |
| Standardabweichung | +/- 183,1 | +/- 0,7 | | |
| | | | | |
| Verbundverklebung: Stahl: sandge. / ABS: glatt (n. 72 h RT - Lagerung) | 2438 | 9,8 | KB | i.O. |
| Standardabweichung | +/- 190,4 | +/- 0,8 | | |
| | | | | |
| Verbundverklebung: Stahl: sandge. / PVC: glatt (n. 72 h RT - Lagerung) | 2118 | 8,5 | MB-PVC | i.O. |
| Standardabweichung | +/- 144,3 | +/- 0,6 | | |
| | | | | |
| Verbundverklebung: Stahl: sandge. / PC: glatt (n. 72 h RT - Lagerung) | 2308 | 9,2 | MB-PC | |
| Standardabweichung | +/- 403,8 | +/- 1,6 | | |
| | | | | |
| Verbundverklebung: Alu.: sandge /ABS: glatt (n. 72 h RT - Lagerung) | 1498 | 6,0 | KB | i.O. |
| Standardabweichung | +/- 177,2 | +/- 0,7 | | |
| Verbundverklebung: ABS: glatt / PVC: glatt (n. 72 h RT-Lagerung) | 2366 | 9,5 | MB-ABS | |
| Standardabweichung | +/- 88,2 | +/- 0,4 | | |
| | | | | |
| Verbundverklebung: ABS: glatt / PC: glatt (n 72 h RT-Lagerung) | 2010 | 8,0 | MB-PC | |
| Standardabweichung | +/- 144,5 | +/- 0,6 | | |
| | | | | |
| Verbundverklebung: PVC: glatt / PC: glatt n 72 h RT-Lagerung) | 2352 | 9,4 | MB | |
| | +/- 326,8 | +/- MB | | |

**Tabelle 2**

| Prüfung auf Spaltüberbrückung und Alterungsbeständigkeit (Wärmebeständigkeit, Feuchtklima- und Wechselklimatest) | | | | |
|---|---|---|---|---|
| Die nachfolgend eingesetzten Zusammensetzungen wurden 6 Wochen bei RT gelagert. | | | | |

| | N (Mittelwert) | N/mm2 (Mittelwert) | Bruch | Durchhärtung |
|---|---|---|---|---|
| Zusammensetzung 1) | | | | |
| Stahl: sandgestrahlt (n. 96 h RT-Lagerung) Spalt: 0,10 mm | 4304 | 17,2 | KB | i.O. |
| Standardabweichung | +/- 205,1 | +/- 0,8 | | |
| | | | | |

| Zusammensetzung 2) | | | | |
|---|---|---|---|---|
| Stahl: sandgestrahlt (n. 96 h RT-Lagerung) Spalt 0,10 mm | 3282 | 13,1 | KB | i.O. |
| Standardabweichung | +/- 327,0 | +/- 1,3 | | |
| | | | | |

| Zusammensetzung 1) | | | | |
|---|---|---|---|---|
| Stahl: sandgestrahlt (n. 96 h RT-Lagerung 14 Tage 100°C-Lagerung) | + 5936 | 23,7 | KB | i.O. |
| Standardabweichung | +/- 860,4 | +/- 3,4 | | |

| Zusammensetzung 2) | | | | |
|---|---|---|---|---|
| Stahl: sandgestrahlt (n. 96 h RT-Lagerung + 14 Tage 100°C-Lagerung) | 4704 | 18,8 | KB | i.O. |
| Standardabweichung (Prüfung bei RT) | +/- 451,9 | +/- 1,8 | | |
| | | | | |

| Zusammensetzung 1) | | | | |
|---|---|---|---|---|
| Stahl: sandgestrahlt (n. 96 h RT-Lagerung + 5 Tage Lagerung bei 40°C, 99% Luft- | | | | |
| feuchtigkeit) | 3300 | 13,2 | KB | i.O. |
| Standardabweichung | +/- 424,3 | +/- 1,7 | | |
| | | | | |

| Zusammensetzung 2 | | | | |
|---|---|---|---|---|
| Stahl: sandgestrahlt (n. 96 h RT-Lagerung + 5 Tage Lagerung bei 40°C, 99% Luft- | | | | |
| feuchtigkeit) | 2604 | 10,4 | KB | i.O. |
| Standardabweichung | +/- 453,6 | +/- 1,8 | | |

| Zusammensetzung 1) | | | | |
|---|---|---|---|---|
| Stahl: sandgestrahlt (n.96 h RT-Lagerung + 10 Tage Lagerung bei 40°C, 99% Luftfeuchtigkeit) | 3062 | 12,2 | KB | i.O. |
| Standardabweichung | +/- 447,0 | +/- 1,8 | | |
| | | | | |

| Zusammensetzung 2) | | | | |
|---|---|---|---|---|
| Stahl: sandgestrahlt (n. 96 h RT-Lagerung + 10 Tage Lagerung bei 40°C, 99% Luftfeuchtigkeit) | 2604 | 11,8 | KB | i.O. |
| Standardabweichung | +/- 76,8 | +/- 0,4 | | |

### VI) Verkürzung der Luftkontaktzeit durch Erwärmung der Prüfkörper

Für nachfolgende Versuche wurden jeweils ca. 60 mg der Klebstoffzusammensetzung 1) einseitig auf den Prüfkörper aufgetragen, eine Minute mit einer Infrarot-Lampe (Osram, 250 W) aus einem Abstand von 13 cm bestrahlt, wodurch sich der Prüfkörper an der Stelle auf die der Klebstoff aufgetragen war auf 40-50°C erwärmte. Dann wurde gefügt und nach verschiedenen Zeiten der Lagerung bei Raumtemperatur wurden Messungen an den Verklebungen durchgeführt. Die angegebenen Werte für die Zugscherfestigkeit stellen wiederum Mittelwerte aus wenigstens 5 Einzelmessungen dar. "w.f." bedeutet wenig feucht. Die nachfolgende Tabelle 3 gibt die Ergebnisse wieder.

**Tabelle 3**

| | N (Mittelwert) | N/mm² (Mittelwert) | Bruch | Durchhärtung |
|---|---|---|---|---|
| Stahl: sandgestrahlt (n. 15 min.-Lagerung) | 1878 | 7,5 | KB | w.f. |
| Standardabweichung | +/- 492,7 | +/- 2,0 | | |
| | | | | |
| Stahl: sandgestrahlt (n. 30 min.-Lagerung) | 2604 | 10,4 | KB | w.f. |
| Standardabweichung | +/- 255,5 | +/- 1,0 | | |
| | | | | |
| Stahl: sandgestrahlt (n 60 min.-Lagerung) | 3485 | 13,9 | KB | w.f. |
| Standardabweichung | +/- 126,6 | +/- 0,5 | | |
| | | | | |
| Stahl: sandgestrahlt (n 120 min.-Lagerung) | 3700 | 14,8 | KB | i.O. |
| Standardabweichung | +/- 258,1 | +/- 1,0 | | |
| | | | | |
| Stahl: sandgestrahlt (n. 180 min.-Lagerung) | 3770 | 15,1 | KB | i.O. |
| Standardabweichung | +/- 367,3 | +/- 1,5 | | |

### VII) System zu Lagerung und Dosierung von aeroben Einkomponentenk lebstoffen

a) Flexibler, luftundurchlässiger Kunststoffbehälter (mit Halterung in Druckbehälter hineingestellt oder gehängt) - Dosierung des Klebstoffes.
   Mit Hilfe des oben beschriebenen Dosiersystems wurden 2 kg Klebstoff aus einem EVAL-Weichgebinde (3 1) über einen Zeitraum von 36 h dosiert. Der Restinhalt wurde über eine Differenzwägung bestimmt und betrug 8 g (4%). Zusätzlich wurde die Lagerstabilität über einen Zeitraum von 4 Wochen bei einem konstanten Druck von 2 bar bestimmt. Ein Viskositätsanstieg bei sich anschließender Dosierung wurde nicht festgestellt.
b) Automatische Dosierung von aeroben Klebstoffen aus in Kartuschen gelagerten Tuben.
   Eine 200 g Aluminiumtube, befüllt mit einem aerob härtenden Reaktivklebstoff (Viskosität: 1000-1500 mPa·s) wird in den Adapter eingeschraubt und abgedichtet. Somit ist eine Berührung mit Luftsauerstoff ausgeschlossen. Anschließend wird die Tube mit dem Adapter in den Kartuschenbehälter hineingeschoben. Eine ausgangsseitige Verschraubung zum sauerstoffundurchlässigen Produktschlauch (Polyurethan 4 x 1 mm und 2 x 1 mm, Fa. Festo) sorgt für einen direkten Abschluß vom Produkt zur Druckluft und Umgebungsluft. Die produktberührenden Teile des Ventils sind aus PTFE gefertigt. Die Impulsauslösung bzw. Applikation kann durch Pistolengriff, Fußschalter oder externen Schließerkontakt (potentialfrei) erfolgen.

## Patentansprüche

1. Aerob härtende Zusammensetzung umfassend radikalisch polymersierbare Verbindungen, ein Aktivatorsystem und gegebenenfalls übliche Zusatzstoffe, dadurch gekennzeichnet, daß die Zusammensetzung als radikalisch polymerisierbare Verbindungen
A) wenigstens ein Polyurethan(meth)acrylat der allgemeinen Formel
[H₂C=CR¹-C(=O)-O-R²-O-C(=O)-NH-]ₙ R³ (I)
enthält, worin
R¹ = Wasserstoff oder eine Methylgruppe
R² = eine lineare oder verzweigte Alkylgruppe mit 2 bis 6 Kohlenstoffatomen oder Alkylenoxide mit 4 bis 21 Kohlenstoffatomen,
n = 2 oder 3 ist und
R³ für n = 2 ist:
[-Q-NH-C(=O)]₂[{-O-R⁴-O-C(=O)-NH-Q'-NH-C(=O)}ₘ-O-R⁴-O-]
wobei m = 0 bis 10 ist,
R⁴
a) ein Polycaprolactondiol-Rest,
b) ein Polytetrahydrofurfuryldiol-Rest,
c) ein Diol-Rest ist, der sich von einem Polyesterdiol ableitet, der gekennzeichnet ist durch ein C:O-Verhältnis von > 2.6, ein C:H-Verhältnis von < 10 und ein Molekulargewicht von 1000 bis 20000, oder
d) ein Diol-Rest ist, der sich von einem bei 20 °C flüssigen PES-Diol mit einem Molekulargewicht von 4000 bis 10000 nach HPLC ableitet, und
R³ für n = 3 ist:
[-Q-NH-C(=O)-O-((CH₂)₅-C(=O))ₚ-]₃ R⁵ ,
wobei R⁵ ein Triol-Rest eines 3 bis 6 Kohlenstoffatome enthaltenden, linearen oder verzweigten dreiwertigen Alkohols und m 1 bis 10 ist und
Q und Q' unabhängig voneinander 6 bis 18 Kohlenstoffatome enthaltende aromatische, aliphatische oder cycloaliphatische Gruppen sind, die sich von Diisocyanaten oder Diisocyanatgemischen ableiten,
B) ein oder mehrere (Meth)acrylat-Comonomere enthält,
wobei die Zusammensetzung
20-80 Gew.-% des Polyurethan(meth)acrylates sowie
80-20 Gew.-% des (Meth)acrylat-Comonomeren,
bezogen auf die Gesamtmenge der polymerisierbaren Verbindungen, enthält und das Aktivatorsystem ein Hydrazon-Aktivatorsystem ist.

2. Zusammensetzung nach Anspruch 1, dadurch gekennzeichnet, daß sie
- 20-70 Gew.-% des Polyurethan(meth)acrylats und
80-30 Gew.-% des (Meth)acrylat-Comonomeren, jeweils bezogen auf die Gesamtmenge der polymerisierbaren Verbindungen, enthält.

3. Zusammensetzung nach Anspruch 1 oder 2, dadurch gekennzeichnet, daß R² ausgewählt ist aus Ethylen-, Propylen-, i-Propylen-, n-Butylen- oder i-Butylen-, Ethylenoxid- oder Propylenoxid-Einheiten.

4. Zusammensetzung nach einem oder mehreren der Ansprüche 1 bis 3, dadurch gekennzeichnet, daß sich Q und Q' unabhängig voneinander ableiten aus Diisocyanaten, die ausgewählt sind aus 2,4-Toluendiisocyanat, 2,6-Toluendiisocyanat, 4,4'-Diphenylmethandiisocyanat (MDI), 4,4'-Dicyclohexyldiisocyanat, meta - und para-Tetramethylxylendiisocyanat, 3-Isocyanatomethyl-3,5,5-trimethylcyclohexylisocyanat (Isophorondiisocyanat), Hexamethylendiisocyanat, - 1,5-Naphthylendiisocyanat, Dianisidindiisocyanat, Di(2-isocyanatoethyl)-bicyclo[2.2.1]-hept-5-en-2,3-dicarboxylat, 2,2,4- und 2,4,4-Trimethylenhexamethylendiisocyanat und Gemischen daraus.

5. Zusammensetzung nach einem oder mehreren der Ansprüche 1 bis 4, dadurch gekennzeichnet, daß das (Meth)acrylat-Comonomer (B) ausgewählt ist aus Allylacrylat, Allylmethacrylat, Methylacrylat, Methylmethacrylat 2-Hydroxyethylacrylat, 2-Hydroxyethylmethacrylat, 2- oder 3-Hydroxypropylacrylat, 2- oder 3-Hydroxypropylmethacrylat, 6-Hydroxyhexylacrylat, 6-Hydroxyhexylmethacrylat, Benzylmethacrylat, Phenylethylmethacrylat, 2-Phenoxyethylmethacrylat, Morpholinoethylmethacrylat, Glycidylmethacrylat, Piperidylacrylamid, Neopentylmethacrylat, Cyclohexylmethacrylat, tert.-Butylmethacrylat und Tetrahydrofurfurylmethacrylat oder Gemischen davon sowie Dimethacrylat.

6. Verfahren zur Herstellung der Zusammensetzung, wie in den Ansprüchen 1 bis 5 definiert ist, durch Homogenisierung der polymerisierbaren Verbindung oder den Verbindungen, des Aktivatorsystems und gegebenenfalls weiteren Zusätzen.

7. Verwendung der Zusammensetzung nach einem oder mehreren der Ansprüche 1 bis 6, als aerob härtendes Dichtungs- und Klebstoffsystem, streichfähiges Mittel für die Oberflächenbeschichtung, Formmasse oder als Zusatz zu Tinten und Druckfarben.

8. Verwendung nach Anspruch 7 zum Verkleben von gleichen oder verschiedenen Werkstoffen, die ausgewählt sind aus Metall, Kunststoffen, Keramik, Glas oder cellulosehaltigen Materialien.

9. Verwendung nach Anspruch 7 oder 8 zum Verkleben von Lautsprecherbauteilen.

10. Verwendung nach mindestens einem der Ansprüche 7 bis 9 zum Verkleben von Werkstoffen mit der aerob härtenden Klebstoffzusammensetzung, wie in den Ansprüchen 1 bis 6 definiert, durch
- Auftragen der Klebstoffzusammensetzung auf wenigstens eine der miteinander zu verbindenden Oberflächen der Werkstoffe,
- Erwärmen der Werkstoffe an der mit der Klebstoffzusammensetzung versehenen Oberfläche während des Kontaktes der Klebstoffzusammensetzung mit Luftsauerstoff auf eine Temperatur von 20-80°C,
- Verbinden der Werkstoffe an den Oberflächen miteinander,
- Aushärtenlassen der Klebstoffzusammensetzung.

11. Verwendung nach Anspruch 7, dadurch gekennzeichnet, daß das Erwärmen der Werkstoffoberfläche vor dem Auftragen der Klebstoffzusammensetzung erfolgt.

12. Verwendung nach mindestens einem der Ansprüche 7 bis 11, gekennzeichnet durch ein System zu Lagerung und Dosierung der aerob härtenden Reaktivklebstoffzusammensetzung, wie in den Ansprüchen 1 bis 6 definiert, bestehend aus
- einem flexiblen Behälter aus einem luftundurchlässigen Material,
- einer daran angebrachten Produktaustrittsöffnung und einem Abgabeventil,
- einem den flexiblen Behälter umschließenden und mit Produktdurchtrittsöffnungen versehenen Druckbehälter,
- gegebenenfalls an den Druckbehälter angebrachten Anschlüssen für die Druckbeaufschlagung des Druckbehälters,
- Steuergeräten und Dosiereinrichtungen
wobei die Reaktivklebstoffzusammensetzung in dem flexiblen Behälter enthalten ist.

13. Verwendung nach Anspruch 12, dadurch gekennzeichnet, daß der flexible, die Klebstoffzusammensetzung enthaltende Behälter in den Druckbehälter eingehängt ist.

14. Verwendung nach Anspruch 11, dadurch gekennzeichnet, daß der flexible, die Klebstoffzusammensetzung enthaltende Behälter eine Tube und der Druckbehälter eine Kartusche ist.

## Claims

1. An aerobically curing composition comprising free-radical polymerizable compounds, an activator system and optionally conventional additives, characterized in that said composition contains as said free-radical polymerizable compounds
A) at least one poly(urethane (meth)acrylate) of general formula
[H₂C=CR¹-C(=O)-O-R²-O-C(=O)-NH-]ₙR³ (I)
wherein
R¹ is hydrogen or a methyl group;
R² is a linear or branched alkyl group containing from 2 to 6 carbon atoms or an alkylene oxide containing from 4 to 21 carbon atoms;
n is 2 or 3; and
for n = 2, R³ is
[-Q-NH-C(=O)]₂[{-O-R⁴-O-C(=O)-NH-Q'-NH-C (=O)}ₘ-O-R⁴-O-]
wherein m = 0 to 10;
R⁴ is
a) a polycaprolactonediol residue;
b) a polytetrahydrofurfuryldiol residue;
c) a diol residue derived from a polyester diol which is characterized by a C:O ratio of > 2.6, a C:H ratio of < 10, and a molecular weight of from 1000 to 20000; or
d) a diol residue derived from a PES diol which is liquid at 20°C and has a molecular weight of from 4000 to 10000 according to HPLC; and
for n = 3, R³ is
[-Q-NH-C(=O)-O-((CH₂)₅-C(=O))ₚ-]₃R⁵
wherein R⁵ is a triol residue of a linear or branched trihydric alcohol containing from 3 to 6 carbon atoms, and m = 1 to 10; and
Q and Q' are independently aromatic, aliphatic or cycloaliphatic groups containing from 6 to 18 carbon atoms and derived from diisocyanates or diisocyanate mixtures;
B) one or more (meth)acrylate comonomers;
wherein said composition contains from 20 to 80% by weight of said poly(urethane (meth)acrylate) and from 80 to 20% by weight of said (meth)acrylate comonomer, based on the total amount of polymerizable compounds; and
said activator system is a hydrazone activator system.

2. The composition according to claim 1, characterized by containing from 20 to 70% by weight of said poly(urethane (meth)acrylate) and from 80 to 30% by weight of said (meth)acrylate comonomer, respectively based on the total amount of polymerizable compounds.

3. The composition according to claim 1 or 2, characterized in that R² is selected from ethylene, propylene, i-propylene, n-butylene or i-butylene, ethylene oxide or propylene oxide units.

4. The composition according to one or more of claims 1 to 3, characterized in that Q and Q' are independently derived from diisocyanates selected from 2,4-toluenediisocyanate, 2,6-toluenediisocyanate, 4,4'-diphenylmethanediisocyanate (MDI) , 4,4'-dicyclohexyldiisocyanate, meta- and paratetramethylxylenediisocyanate, 3-isocyanatomethyl-3,5,5-triethylcyclohexylisocyanate (isophoronediisocyanate), hexamethylenediisocyanate, 1,5-naphthylenediisocyanate, dianisidinediisocyanate, bis (2-isocyanatoethyl)bicyclo-[2.2.1]hept-5-ene-2,3-dicarboxylate, 2,2,4- and 2,4,4-trimethylhexamethylenediisocyanate and mixtures thereof.

5. The composition according to one or more of claims 1 to 4, characterized in that said (meth)acrylate comonomer (B) is selected from allyl acrylate, allyl methacrylate, methyl acrylate, methyl methacrylate, 2-hydroxyethylacrylate, 2-hydroxyethylmethacrylate, 2- or 3-hydroxypropyl acrylate, 2- or 3-hydroxypropyl methacrylate, 6-hydroxyhexyl acrylate, 6-hydroxyhexyl methacrylate, benzyl methacrylate, phenylethyl methacrylate, 2-phenoxyethyl methacrylate, morpholinoethyl methacrylate, glycidyl methacrylate, piperidylacrylamide, neopentyl methacrylate, cyclohexyl methacrylate, tert-butyl methacrylate and tetrahydrofurfuryl methacrylate or mixtures thereof, and dimethacrylate.

6. A process for the preparation of the composition as defined in claims 1 to 5 by homogenizing said polymerizable compound or compounds, said activator system and optionally further additives.

7. Use of the composition according to one or more of claims 1 to 6 as an aerobically curing sealant and adhesive system, brushable composition for surface coating, molding composition or additive for inks and printing inks.

8. The use according to claim 7 for the bonding of the same or different materials selected from metals, plastics, ceramics, glass or cellulose-containing materials.

9. The use according to claim 7 or 8 for the bonding of loudspeaker components.

10. The use according to at least one of claims 7 to 9 for the bonding of materials using the aerobically curing adhesive composition as defined in claims 1 to 6 by
- applying the adhesive composition to at least one of the surfaces of the materials to be joined;
- heating the materials at the surface provided with the adhesive composition during contact of the adhesive composition with atmospheric oxygen, at a temperature of from 20 to 80°C;
- joining the materials at their surfaces;
- allowing the adhesive composition to cure.

11. The use according to claim 7, characterized in that said heating of the surface of the material is done prior to said applying of the adhesive composition.

12. The use according to at least one of claims 7 to 11, characterized by a system for the storage and dosage of said aerobically curing reactive adhesive composition as defined in claims 1 to 6, consisting of
- a flexible container made of an air-impermeable material;
- a product discharge opening and a dispensing valve provided on said container;
- a pressure container surrounding said flexible container and provided with product penetration openings;
- optionally ports provided on said pressure container for applying pressure to said pressure container;
- controlling and metering devices;
said reactive adhesive composition being contained in said flexible container.

13. The use according to claim 12, characterized in that said flexible container containing said adhesive composition is suspended in said pressure container.

14. The use according to claim 11, characterized in that said flexible container containing said adhesive composition is a collapsible tube and said pressure container is a cartridge.

## Revendications

1. composition durcissant par voie aérobie comprenant des composés polymérisables radicalairement, un système d'activateur et le cas échéant les additifs usuels, caractérisée en ce que la composition contient comme composés polymérisables radicalairement:
A) au moins un polyuréthane(méth)acrylate de formule générale
[H₂C=CR¹-C(=O)-O-R²-O-C(=O)-NH-]ₙ R³ (I)
où
R¹ est un hydrogène ou un groupe méthyle
R² est un groupe alkyle linéaire ou ramifié avec 2 à 6 atomes de carbone ou des oxydes d'alkyléne avec 4 à 21 atomes de carbone,
n = 2 ou 3 et
R³ pour n = 2 est :
[-Q-NH-C(=O)]₂[{-O-R⁴-O-C(=O)-NH-Q'-NH-C(=O)}ₘ-O-R⁴-O-]
où
m = 0 à 10,
R⁴ est
a) un radical polycaprolactonediol b) un radical polytétrahydrofurfuryldiol,
c) un radical diol, qui dérive d'un polyester. diol, qui est caractérisé par un rapport C:O > 2,6, un rapport C:H < 10 et un poids moléculaire de 1000 à 20000 ou
d) un radical diol qui dérive d'un PES-Diol liquide à 20 % avec un poids moléculaire de 4000 à 10000 mesuré par HPLC, et
R³ pour n = 3 est :
[-Q-NH-C(=O)-O((CH₂)₅-C(=O))ₚ-]₃ R⁵
où
R⁵ est un radical triol d'un alcool trifonctionnel, linéaire ou ramifié contenant 3 à 6 atomes de carbone et m est 1 à 10, et
Q et Q', indépendamment l'un de l'autre, sont des groupes aromatiques, aliphatiques ou cycloaliphatiques, contenant 6 à 18 atomes de carbone qui dérivent de diisocyanates ou de mélanges diisocyanates,
B) contient un ou plusieurs comonoméres (méth)acrylates où la composition contient
20-80 % en poids du polyuréthane-(meth)acrylate ainsi que
80-20 % de comonomère (méth)acrylate par rapport à la quantité totale des composés polymérisables et le système d'activateur est un système d'activateur à l'hydrazone.

2. Composition selon la revendication 1,
caractérisée en ce qu'
elle contient :
- 20-70 % en poids du polyuréthane(méth)acrylate et
80-30 % en poids du comonomère(méth)acrylate, respectivement par rapport à la quantité globale de composés polymérisables.

3. Composition selon la revendication 1 ou 2,
caractérisée en ce qu'
R² est choisi parmi les composants éthylène, propylène, i-propylène, n-butylène ou i-butylène, oxyde d'éthylène ou oxyde de propylène.

4. Composition selon l'une ou plusieurs des revendications 1 à 3,
caractérisée en ce que
Q et Q' dérivent indépendamment l'un de l'autre de diisocyanates qu'on choisit parmi les 2,4-toluène-diisocyanate, 2,6-toluène-diisocyanate, 4,4'-diphénylméthanediisocyanate (MDI), 4,4'-dicyclohexyldiisocyanate, méta- et paratétraméthylxylénediisocyanate, 3-isocyanatométhyl-3,5,5-triméthylcyclohexylisocyanate (isophoronediisocyanate), hexaméthylénediisocyanate, 1,5-naphtylénediisocyanate, dianisidindiisocyanate, di(2-isocyanatoéthyl)-bicyclo[2,2, 1]-hept-5-èn-2,3-dicarboxylate, 2,2,4- et 2,4,4-triméthylènehexaméthylènediisocyante et leurs mélanges.

5. Composition selon l'une ou plusieurs des revendications 1 à 4,
caractérisée en ce qu'on choisit le comonomère(méth)acrylate (B) parmi les acrylate d'allyle, méthacrylate d'allyle, acrylate de méthyle, méthacrylate de méthyle, acrylate de 2-hydroxyéthyle, méthacrylate de 2-hydroxyéthyle, acrylate de 2- ou 3-hydroxypropyle, méthacrylate de 2- ou 3-hydroxypropyle, acrylate de 6-hydroxyhexyle, méthacrylate de 6-hydroxyhexyle, méthacrylate de benzyle, méthacrylate de phényléthyle, méthacrylate de 2-phénoxyéthyle, méthacrylate de morpholinoéthyle, méthacrylate de glycidyle, pipéridylacrylamide, méthacrylate de néopentyle, méthacrylate de cyclohexyle, méthacrylate de tert.-butyle et méthacrylate de tétrahydrofurfuryle ou leurs mélanges ainsi que du diméthacrylate.

6. Procédé de préparation de la composition définie aux revendications 1 à 5, par homogénéisation du composé polymérisable ou des composés polymérisables, du système d'activateur et, le cas échéant, d'autres additifs.

7. Utilisation de la composition selon l'une ou plusieurs des revendications 1 à 6 comme système d'adhésif ou de mastic durcissant par voie aérobie, produit qu'on peut étaler pour le revêtement de surface, masse à mouler ou comme additif d'encres à écrire et encres d'imprimerie.

8. Utilisation selon la revendication 7 pour coller des matériaux identiques ou différents qu'on choisit parmi les métaux, les matières plastiques, la céramique, le verre ou des matériaux contenant de la cellulose.

9. Utilisation selon la revendication 7 ou 8 pour coller des pièces constitutives de haut-parleurs.

10. utilisation selon au moins une des revendications 7 à 9 pour coller des matériaux avec la composition d'adhésif durcissant par voie aérobie, qui est définie aux revendications 1 à 6, par
- dépôt de la composition d'adhésif sur au moins l'une des surfaces des matériaux à assembler,
- chauffage des matériaux au niveau de la surface munie de la composition d'adhésif pendant le contact de la composition d'adhésif avec l'oxygène de l'air à une température de 20-80°C,
- assembler les matériaux par leurs surfaces,
- faire durcir la composition d'adhésif.

11. Utilisation selon la revendication 7,
caractérisée en ce que
le chauffage de la surface des matériaux a lieu avant le dépôt de la composition d'adhésif.

12. Utilisation selon au moins une des revendications 7 à 11,
caractérisée par
un système de conservation et de dosage de la composition d'adhésif réactif durcissant par voie aérobie qui est définie selon les revendications 1 à 6, constitué de :
- un récipient souple en matériau imperméable à l'air,
- un orifice de sortie de produit qui y est fixé et une soupape de distribution,
- un récipient sous pression entourant le récipient souple et muni d'orifices de passage du produit,
- le cas échéant des raccords disposés sur le récipient sous pression pour la mise sous pression du réservoir sous pression,
- des appareils de commande et des dispositifs de dosage, où la composition d'adhésif réactif est contenue dans le récipient souple.

13. Utilisation selon la revendication 12,
caractérisée en ce que
le récipient contenant la composition d'adhésif est suspendue dans le récipient sous pression.

14. Utilisation selon la revendication 11,
caractérisée en ce que
le récipient contenant la composition d'adhésif est un tube et le récipient sous pression est une cartouche.
